# EUROPÄISCHE PATENTANMELDUNG

(11) **EP 1 378 407 A1**
(43) Veröffentlichungstag der Anmeldung: **07.01.2004**
(21) Anmeldenummer: 03014952.0
(22) Anmeldetag: 01.07.2003
(51) Int. Cl.: B60S 5/06, B66F 9/075, B62B 3/06

(54) **Hubwagen zum Transport eines Batterieblocks eines Flurförderzeugs**

(30) Priorität: 05.07.2002 DE 10230389
(71) Anmelder: STILL GMBH, D-22113 Hamburg (DE)
(72) Erfinder: Jahns, Claus-Peter, 21107 Hamburg (DE); Rademacher, Frank, 22143 Hamburg (DE)
(74) Vertreter: Lang, Michael

(57) **Zusammenfassung**

Gegenstand der Erfindung ist ein Hubwagen (6) zum Transport eines Batterieblocks (1) eines Flurförderzeugs, insbesondere eines Gabelstaplers. Der Hubwagen (6) weist mindestens ein elektrisches Aggregat auf. Erfindungsgemäß ist das elektrische Aggregat zur Versorgung mit elektrischer Energie mit dem zu transportierenden Batterieblock (1) verbindbar. Der Hubwagen (6) weist keine eigene Batterie auf. Als elektrisches Aggregat ist ein elektrischer Fahrantriebsmotor vorgesehen.

## Beschreibung

Die Erfindung betrifft einen Hubwagen zum Transport eines Batterieblocks eines Flurförderzeugs, insbesondere eines Gabelstaplers, wobei der Hubwagen mindestens ein elektrisches Aggregat aufweist.

Elektrisch angetriebene Flurförderzeuge, z.B. Elektrogabelstapler, weisen einen mit Akkumulatoren bestückten Batterieblock auf, der beispielsweise zur Durchführung von Ladevorgängen oder zu Wartungszwecken aus dem Flurförderzeug entnommen werden kann. Bekannt sind hierbei Flurförderzeuge, die eine seitliche Entnahmeöffnung aufweisen, durch welche der Batterieblock horizontal aus dem Flurförderzeug entnommen oder in das Flurförderzeug eingesetzt werden kann. Zum Transport, also zum Anheben und Bewegen des Batterieblocks, wird häufig ein Hubwagen eingesetzt, der beispielsweise als Galgenhubwagen oder als Gabelhubwagen ausgeführt sein kann. Diese Hubwagen sind üblicherweise ebenfalls elektrisch angetrieben und weisen für den Fahrantrieb und/oder den Hubantrieb mindestens ein elektrisches Aggregat auf. Zur Energieversorgung des elektrischen Aggregats sind die im Stand der Technik bekannten Hubwagen mit einer eigenen Batterie ausgerüstet.

Der Erfindung liegt die Aufgabe zugrunde, einen besonders einfach aufgebauten Hubwagen zum Transport der Batterieblöcke von Flurförderzeugen zur Verfügung zu stellen.

Diese Aufgabe wird erfindungsgemäß dadurch gelöst, dass das elektrische Aggregat zur Versorgung mit elektrischer Energie mit dem zu transportierenden Batterieblock verbindbar ist. Der Antrieb der elektrischen Aggregate des Hubwagens erfolgt damit mit der im transportierten Batterieblock gespeicherten Energie. Wenn der transportierte Batterieblock voll geladen ist, ist die Versorgung des Hubwagens aus diesem Batterieblock problemlos möglich. Gleiches gilt auch bei dem Entfernen eines entladenen Batterieblocks aus dem Flurförderzeug, da der Batterieblock im normalen Betrieb des Flurförderzeugs bereits mit einer Restladung von ca. 20% als entladen gilt, wodurch die Zellen des Batterieblocks geschont werden. Mit einem geringen Teil dieser Restladung wird der Hubwagen auf dem kurzen Weg zwischen dem Flurförderzeug und einer Ladestation versorgt.

Ein besonders einfacher Aufbau des Hubwagens ergibt sich, wenn dieser keine eigene Batterie aufweist. Wenn ein Batterieblock transportiert wird, liefert stets dieser Batterieblock die von den elektrischen Aggregaten des Flurförderzeugs benötigte elektrische Energie. Wenn sich kein Batterieblock auf dem Hubwagen befindet, wird dieser durch die Bedienperson von Hand bewegt. Hierzu ist nur ein geringer Kraftaufwand erforderlich, da der ohne Batterieblock ausgeführte Hubwagen ein geringes Eigengewicht aufweist.

Gemäß einer ersten Ausführungsform ist als elektrisches Aggregat des Hubwagens ein elektrischer Fahrantriebsmotor vorgesehen. Der Hubwagen ist dabei ähnlich einem Handgabelhubwagen aufgebaut, der zusätzlich einen elektrischen Fahrantriebsmotor besitzt. Die Hubvorrichtung des Hubwagens wird von der Bedienperson von Hand, z.B. über eine handbetriebene Hydraulikpumpe betätigt.

Ein manuelles Verschieben des Hubwagens wird erleichtert, wenn der Fahrantriebsmotor über eine Freilaufvorrichtung mit einem Antriebsrad verbunden ist. Durch die Freilaufvorrichtung kann das Antriebsrad des Hubwagens von dem Fahrantriebsmotor abgekuppelt werden, so dass sich dieser bei einem manuellen Verschieben des Hubwagens nicht mitdreht. Die Freilaufvorrichtung kann beispielsweise als eine manuell oder automatisch lösbare Kupplung oder als herkömmlicher, nur in eine Drehrichtung momentenübertragender Freilauf ausgeführt sein.

Eine erweiterte Ausführungsform des Hubwagens besteht darin, dass als elektrisches Aggregat ein elektrischer Hubantriebsmotor vorgesehen ist. Hierbei erfolgt auch das Anheben eines Batterieblocks mit der in dem Batterieblock gespeicherten elektrischen Energie.

Dabei ist mit dem elektrischen Hubantriebsmotor bevorzugt eine Hydraulikpumpe antreibbar. Es kann dann in dem Hubwagen eine übliche hydraulische Hubvorrichtung verwendet werden.

Bevorzugt ist das elektrische Aggregat mittels eines Batteriesteckers mit dem Batterieblock verbindbar. Es können hierbei die gleichen Steckverbindungen verwendet werden, wie zum Anschließen des Batterieblocks an das zugehörige Flurförderzeug. Alternativ sind hier auch automatische Vorrichtungen möglich. So kann der Hubwagen, während er unter den im Flurförderzeug befindlichen Batterieblock geschoben wird, die Kontaktierung des Batterieblocks zum Flurförderzeug automatisch trennen und gleichzeitig den Batterieblock mit den elektrischen Aggregaten des Hubwagens verbinden.

Mit besonderem Vorteil ist das elektrische Aggregat für die Versorgung mit unterschiedlichen elektrischen Spannungen ausgelegt ist, vorzugsweise mit Spannungen zwischen 24 und 100 Volt. Somit kann derselbe Hubwagen zum Transport von Batterieblöcken ganz unterschiedlicher Flurförderzeuge eingesetzt werden, deren Betriebsspannungen sich üblicherweise in dem genannten Bereich bewegen.

Gegenstand der Erfindung ist darüber hinaus ein System mit einem erfindungsgemäßen Hubwagen und mit mindestens einem Flurförderzeug, insbesondere Gabelstapler, welches einen in horizontaler Richtung entnehmbaren Batterieblock aufweist. In dem System sind die mechanischen Bauformen des Flurförderzeugs und des Hubwagens aufeinander abgestimmt, so dass ein Anheben und Verschieben des im Flurförderzeug befindlichen Batterieblocks mittels des Hubwagens und ein elektrisches Anbinden des Batterieblocks an die Aggregate des Hubwagens besonders einfach möglich ist.

Weitere Vorteile und Einzelheiten der Erfindung werden anhand des in den schematischen Figuren dargestellten Ausführungsbeispiels näher erläutert. Dabei zeigt
- Figur 1: einen Gabelstapler mit einem in seitlicher Richtung entnehmbaren Batterieblock,
- Figur 2: den Gabelstapler und einen erfindungsgemäßen Hubwagen in Draufsicht.

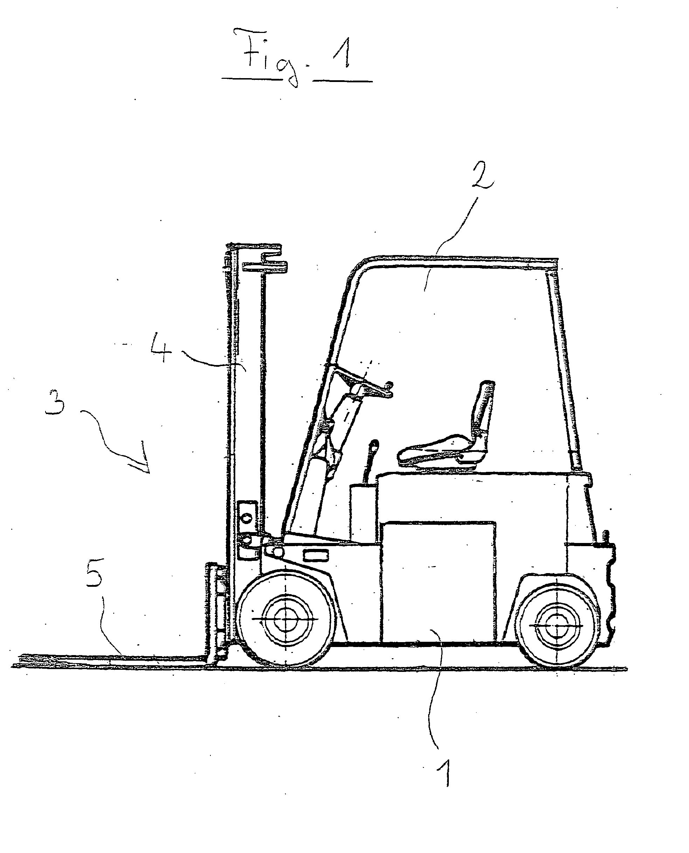

Figur 1 zeigt ein als Gabelstapler ausgeführtes Flurförderzeug mit einem Batterieblock 1. Im Wesentlichen oberhalb des Batterieblocks 1 befindet sich ein Fahrerplatz 2 des Gabelstaplers, eine Lasthandhabungsvorrichtung 3 mit einem Hubgerüst 4 und einer Lastgabel 5 ist vorne am Gabelstapler angeordnet. Der Batterieblock 1 kann in horizontaler Richtung seitlich aus dem Gabelstapler entnommen werden. Hierzu weist der Gabelstapler einen unterhalb des Batterieblocks 1 teilweise offenen Rahmen auf, so dass der Batterieblock beispielsweise mit einem Handgabelhubwagen oder einem elektrisch angetriebenen Nieder- oder Hochhubwagen unterfahren, angehoben und aus dem Gabelstapler heraus bewegt werden kann. Dies erfolgt regelmäßig dann, wenn der in der Regel mit Bleiakkumulatoren bestückte Batterieblock entladen ist und außerhalb des Gabelstaplers geladen werden soll. Als entladen gilt hierbei ein Batterieblock, wenn er ca. 20% Restladung aufweist, wodurch die Lebensdauer des Batterieblocks - im Vergleich zu einem regelmäßigen Aufladen nach vollständiger Entladung - deutlich erhöht wird. Das Einsetzen eines geladenen Batterieblocks in den Gabelstapler erfolgt ebenfalls mittels eines Hubwagens von der Seite in horizontaler Richtung.

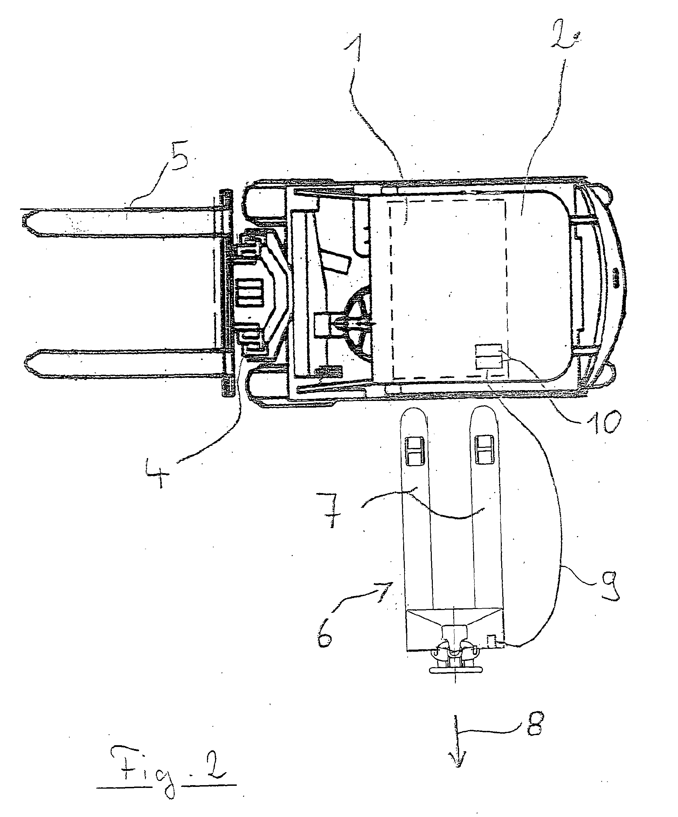

In Figur 2 sind der Gabelstapler und ein erfindungsgemäßer Hubwagen 6 zum Transportieren des Batterieblocks 1 in Draufsicht dargestellt. Die Lastarme 7 des Hubwagens 6 können unter den Batterieblock 1 geschoben werden. Die Lastarme 7 werden dann gemeinsam mit dem Batterieblock 1 angehoben und der Batterieblock 1 in Richtung 8 aus dem Gabelstapler heraus gezogen.

Der Hubwagen 6 weist mindestens ein elektrisches Aggregat, beispielsweise einen elektrischen Fahrantriebsmotor und/oder einen elektrischen Hubmotor auf. Der Hubmotor kann beispielsweise von einem elektrischen Pumpenmotor oder einem elektrischen Spindelantrieb gebildet sein. Erfindungsgemäß erfolgt die Stromversorgung dieser elektrischen Aggregate durch den zu transportierenden Batterieblock. Hierzu wird der Hubwagen 6 über eine elektrische Leitung 9 und eine Steckerverbindung 10 mit dem Batterieblock 1 verbunden. Der zum Batterieblock 1 gehörende Teil der Steckerverbindung 10 dient während des Betriebs des Gabelstaplers auch zu dessen Anbindung an den Batterieblock 1.

Erfindungsgemäß weist der Hubwagen 6 keine eigene Batterie auf, wodurch der Hubwagen 6 in unbeladenem Zustand besonders leicht ist und deshalb mit geringem Kraftaufwand manuell verfahrbar ist. Damit ein elektrischer Antriebsmotor während des manuellen Verfahrens nicht mitgedreht werden muss, ist das Antriebsrad des Hubwagens mit einer Freilaufvorrichtung verbunden. Wenn ein elektrischer Hubantriebsmotor vorgesehen ist, können die Lastarme 7 nur dann angehoben werden, wenn die Stromversorgung durch einen zu transportierenden Batterieblock vorhanden ist. Ein Absenken der Lastarme 7 ist hingegen jederzeit möglich. Alternativ oder zusätzlich zu dem elektrischen Hubantriebsmotor kann ein manueller Hubantrieb, beispielsweise mittels einer manuell betätigbaren Hydraulikpumpe, vorgesehen sein. Der Aufwand für die Herstellung des Hubwagens 6 ist gegenüber einem herkömmlichen Hubwagen mit eigener Batterie deutlich verringert. Damit der Hubwagen 6 zum Transport von Batterieblöcken unterschiedlicher Gabelstapler eingesetzt werden kann, sind die elektrischen Aggregate des Hubwagens für den Betrieb mit unterschiedlichen elektrischen Versorgungsspannungen geeignet.

## Patentansprüche

1. Hubwagen (6) zum Transport eines Batterieblocks (1) eines Flurförderzeugs, insbesondere eines Gabelstaplers, wobei der Hubwagen (6) mindestens ein elektrisches Aggregat aufweist, **dadurch gekennzeichnet, dass** das elektrische Aggregat zur Versorgung mit elektrischer Energie mit dem zu transportierenden Batterieblock (1) verbindbar ist.

2. Hubwagen (6) nach Anspruch 1, **dadurch gekennzeichnet, dass** der Hubwagen (6) keine eigene Batterie aufweist.

3. Hubwagen (6) nach Anspruch 1 oder 2, **dadurch gekennzeichnet, dass** als elektrisches Aggregat ein elektrischer Fahrantriebsmotor vorgesehen ist.

4. Hubwagen (6) nach Anspruch 3, **dadurch gekennzeichnet, dass** der Fahrantriebsmotor über eine Freilaufvorrichtung mit einem Antriebsrad verbunden ist.

5. Hubwagen (6) nach einem der Ansprüche 1 bis 4, **dadurch gekennzeichnet, dass** als elektrisches Aggregat ein elektrischer Hubantriebsmotor vorgesehen ist.

6. Hubwagen (6) nach Anspruch 5, **dadurch gekennzeichnet, dass** mit dem elektrischen Hubantriebsmotor eine Hydraulikpumpe antreibbar ist.

7. Hubwagen (6) nach einem der Ansprüche 1 bis 6, **dadurch gekennzeichnet, dass** das elektrische Aggregat mittels eines Batteriesteckers mit dem Batterieblock (1) verbindbar ist.

8. Hubwagen (6) nach einem der Ansprüche 1 bis 7, **dadurch gekennzeichnet, dass** das elektrische Aggregat für die Versorgung mit unterschiedlichen elektrischen Spannungen ausgelegt ist, vorzugsweise mit Spannungen zwischen 24 und 100 Volt.

9. System mit einem Hubwagen nach einem der Ansprüche 1 bis 8 und mit mindestens einem Flurförderzeug, insbesondere Gabelstapler, welches einen in horizontaler Richtung entnehmbaren Batterieblock (1) aufweist.

10. Verwendung eines Gabelstaplers mit einem in horizontaler Richtung aufweisenen Batterieblock (1) in einem System nach Anspruch 9.
